# EUROPÄISCHE PATENTANMELDUNG

(11) **EP 4 825 652 A1**
(43) Veröffentlichungstag der Anmeldung: **21.10.2026**
(21) Anmeldenummer: 25170953.1
(22) Anmeldetag: 16.04.2025
(51) Int. Cl.: B60N 2/02, B60N 2/06

(54) **GETRIEBEEINHEIT ZUR VERSTELLUNG, INSBESONDERE LÄNGSVERSTELLUNG, EINES SITZES SOWIE VERSTELLBARE SITZEINHEIT**

(71) Anmelder: IMS Gear SE & Co. KGaA, 78166 Donaueschingen (DE)
(72) Erfinder: Hofschulte, Wolfram, 79848 Bonndorf (DE); Fechler, Jens, 78183 Hüfingen (DE); Stähle, Eric, 78073 Bad Dürrheim (DE)
(74) Vertreter: Westphal, Mussgnug & Partner Patentanwälte mbB

(57) **Zusammenfassung**

Getriebeeinheit (10) zur Verstellung, insbesondere Längsverstellung, eines Sitzes, insbesondere eines Fahrzeugsitzes, mit einem Gehäuse (20) umfassend ein erstes Gehäuseteil (22), einer in dem Gehäuse (20) angeordneten Getriebestufe (26) und einem Halteelement (18) zum Herstellen einer mechanischen Wirkverbindung der Getriebeeinheit (10) mit dem Sitz, wobei zumindest ein Teil (42, 50) des Halteelements (18) einstückig an das erste Gehäuseteil (22) angeformt ist,
sowie Verstellbare Sitzeinheit, insbesondere für ein Fahrzeug, mit einem Sitz und einer Getriebeeinheit (10).

## Beschreibung

Die Erfindung betrifft eine Getriebeeinheit zur Verstellung, insbesondere Längsverstellung, eines Sitzes sowie eine verstellbare Sitzeinheit.

Zur elektromotorischen Verstellung von Sitzen in der Längsrichtung eines Kraftfahrzeugs werden häufig Sitzlängsverstellvorrichtungen eingesetzt. Die Sitzlängsverstellvorrichtungen weisen meist ein Spindelgetriebe auf, mittels dessen Drehzahl und Drehmoment zwischen einer Getriebeschnecke und einer Getriebespindel übertragen werden. Dafür ist auf der Getriebespindel eine Spindelmutter angeordnet, die ihrerseits wiederum einen Zahnkranz mit einer Außenverzahnung aufweist, der mit der Getriebeschnecke im Eingriff steht. Derartige Spindelgetriebe sind beispielsweise aus der EP 1 992 842 B1, der DE 103 62 040 B4, der DE 10 2004 046 048 B3 oder der KR 10 1 920 222 B1 bekannt.

Wie insbesondere aus den beiden Dokumenten EP 1 992 842 B1 und DE 103 62 040 B4 ersichtlich ist, können die Spindelgetriebe zum Einsatz in einer Sitzlängsverstellvorrichtung in einem U-förmigen Getriebehalter angeordnet werden. Dabei wird das Getriebegehäuse des Spindelgetriebes häufig mittels elastischer Lagerschalen in dem Getriebehalter gehalten. Der Getriebehalter kann wiederum mit dem zu verstellenden Sitz gekoppelt sein.

Die bekannten Lösungen weisen damit eine verhältnismäßig hohe Teileanzahl auf. Da Sitzlängsverstellvorrichtungen meist in sehr großen Stückzahlen hergestellt werden, sind derartige Systeme mit entsprechend hohen Aufwänden insbesondere in der Montage aber auch im Handling und der zugehörigen Logistik verbunden.

Der Erfindung liegt die Aufgabe zugrunde, eine Anordnung zur Verstellung eines Sitzes bereitzustellen, die geringe Herstellkosten und eine hohe Montagesicherheit aufweist.

Die Aufgabe wird erfindungsgemäß gelöst durch eine Getriebeeinheit mit den Merkmalen des Patentanspruchs 1 sowie eine verstellbare Sitzeinheit mit den Merkmalen des Patentanspruchs 15.

Vorteilhafte Ausgestaltungen und Weiterbildungen der Erfindung sind in den abhängigen Ansprüchen angegeben.

Eine erfindungsgemäße Getriebeeinheit zur Verstellung, insbesondere Längsverstellung, eines Sitzes, insbesondere eines Fahrzeugsitzes, umfasst ein Gehäuse mit einem ersten Gehäuseteil, eine in dem Gehäuse angeordneten Getriebestufe und ein Halteelement zum Herstellen einer mechanischen Wirkverbindung der Getriebeeinheit mit dem Sitz, wobei zumindest ein Teil des Halteelements einstückig an das erste Gehäuseteil angeformt ist. Dadurch kann die Getriebeeinheit eine vergleichsweise geringe Teileanzahl aufweisen. Die Getriebestufe ist vorzugsweise als Schneckengetriebe mit einer Schnecke und einem Schneckenrad ausgebildet. Das Schneckenrad und/oder die Schnecke können in dem Gehäuse gelagert sein. Das Schneckenrad ist vorzugsweise als Spindelmutter mit einer Spindelachse ausgebildet. Die Schnecke ist vorzugsweise drehbar um eine, besonders bevorzugt senkrecht zur Spindelachse angeordneten, Schneckenachse gelagert. Die Getriebestufe kann so mittels einer mit dem Schneckenrad im Eingriff stehenden, vorzugsweise auf der Spindelachse angeordneten, Gewindespindel angetrieben werden. Die Getriebeeinheit kann im Wesentlichen T-förmig mit einem horizontalen Abschnitt und einem in den horizontalen **Ab**schnitt mündenden vertikalen Abschnitt ausgebildet sein. Dabei kann der vertikale Abschnitt im Wesentlichen durch das Gehäuse und der horizontale Abschnitt im Wesentlichen durch das Halteelement gebildet sein. Das Halteelement ist damit vorzugsweise parallel zu der Spindelachse angeordnet.

Das Gehäuse kann ein zweites Gehäuseteil aufweisen, wobei zumindest ein Teil des Halteelements einstückig an das zweite Gehäuseteil angeformt ist. Das Gehäuse und das Halteelement können damit geteilt ausgebildet sein. Vorzugsweise besteht das Gehäuse aus dem ersten Gehäuseteil und dem zweiten Gehäuseteil. Das Schneckenrad und/oder die Schnecke können jeweils in dem ersten Gehäuseteil und dem zweiten Gehäuseteil gelagert sein. In dem Gehäuse können Lagersitze angeordnet sein, die zum einen als für das Schneckenrad vorgesehene Schneckenradlagersitze und zum anderen als für die Schnecke vorgesehene Schneckenlagersitze ausgebildet sein können. Insbesondere die Schneckenradlagersitze können dabei als geteilte Lagersitze ausgebildet sein.

In einer bevorzugten Ausführungsform der Erfindung weist das Halteelement einen ersten Halteabschnitt auf, wobei ein erster Teil des ersten Halteabschnitts einstückig an das erste Gehäuseteil angeformt ist.

Ein zweiter Teil des ersten Halteabschnitts kann einstückig an das zweite Gehäuseteil angeformt sein. Der erste Halteabschnitt ist vorzugsweise durch den ersten Teil und den zweiten Teil des ersten Halteabschnitts gebildet. Der vollständige erste Halteabschnitt wird bei der Montage der Getriebeeinheit vorzugsweise durch das Zusammensetzen des ersten Gehäuseteils und des zweiten Gehäuseteils zu dem Gehäuse gebildet.

Vorzugsweise ist in dem ersten Teil des ersten Halteabschnitts eine erste erste Befestigungsbohrung und in dem zweiten Teil des ersten Halteabschnitts eine erste zweite Befestigungsbohrung angeordnet, wobei die erste erste Befestigungsbohrung und die erste zweite Befestigungsbohrung koaxial zueinander angeordnet sind. Mittels der ersten Befestigungsbohrungen kann die mechanische Wirkverbindung der Getriebeeinheit mit dem Sitz hergestellt werden. Bereits vor der Herstellung dieser mechanischen Wirkverbindung kann bei der Montage der Getriebeeinheit eine Montage- bzw. Transportsicherung hergestellt werden, indem eine Schraube oder ein Bolzen in beiden ersten Befestigungsbohrungen angeordnet wird. Die erste erste Befestigungsbohrung ist vorzugsweise als Gewindebohrung mit einem ersten Gewinde ausgebildet, wobei das erste Gewinde in einem als Vorsprung oder Aussparung angeordneten ersten Kragen des zweiten Halteabschnitts angeordnet sein kann. Die erste zweite Befestigungsbohrung ist vorzugsweise gewindefrei ausgebildet. Die erste erste Befestigungsbohrung und/oder die erste zweite Befestigungsbohrung sind vorzugsweise als Durchgangsbohrung ausgebildet. Zur Montage- bzw. Transportsicherung der Getriebeeinheit kann insbesondere eine Schraube in der ersten zweiten Befestigungsbohrung angeordnet und in das Gewinde der ersten ersten Befestigungsbohrung eingeschraubt werden. Die ersten Befestigungsbohrungen sind vorzugsweise senkrecht zu der Spindelachse angeordnet.

In einer bevorzugten Ausführungsform der Erfindung weist das Halteelement einen zweiten Halteabschnitt auf, wobei ein zweiter Teil des zweiten Halteabschnitts einstückig an das erste Gehäuseteil angeformt ist. Das Halteelement ist vorzugsweise entlang der Spindelachse ausgerichtet. Der erste Halteabschnitt und/oder der zweite Halteabschnitt sind vorzugsweise in Richtung der Spindelachse hintereinander angeordnet. Der erste Teil des ersten Halteabschnitts kann näher an der Spindelachse angeordnet sein als der zweite Teil des zweiten Halteabschnitts. Vorzugsweise sind der erste Teil des ersten Halteabschnitts und der zweite Teil des zweiten Halteabschnitts flächig ausgebildet und besonders bevorzugt parallel zu einer parallel zu der Spindelachse und parallel zu der Schneckenachse angeordneten Ebene angeordnet.

Ein erster Teil des zweiten Halteabschnitts kann einstückig an das zweite Gehäuseteil angeformt sein. Der erste Teil des zweiten Halteabschnitts kann näher an der Spindelachse angeordnet sein als der zweite Teil des ersten Halteabschnitts. Vorzugsweise sind der erste Teil des zweiten Halteabschnitts und der zweite Teil des ersten Halteabschnitts flächig ausgebildet und besonders bevorzugt parallel zu einer parallel zu der Spindelachse und parallel zu der Schneckenachse angeordneten Ebene angeordnet.

In dem ersten Teil des zweiten Halteabschnitts eine zweite erste Befestigungsbohrung und in dem zweiten Teil des zweiten Halteabschnitts eine zweite zweite Befestigungsbohrung angeordnet ist, wobei die zweite erste Befestigungsbohrung und die zweite zweite Befestigungsbohrung koaxial zueinander angeordnet sind. Den ersten Befestigungsbohrungen entsprechend, kann mittels der zweiten Befestigungsbohrungen die mechanische Wirkverbindung der Getriebeeinheit mit dem Sitz hergestellt werden. Bereits vor der Herstellung dieser mechanischen Wirkverbindung kann bei der Montage der Getriebeeinheit eine Montage- bzw. Transportsicherung hergestellt werden, indem eine Schraube oder ein Bolzen in beiden zweiten Befestigungsbohrungen angeordnet wird. Die zweite erste Befestigungsbohrung ist vorzugsweise als Gewindebohrung mit einem zweiten Gewinde ausgebildet, wobei das zweite Gewinde in einem als Vorsprung oder Aussparung angeordneten zweiten Kragen des zweiten Halteabschnitts angeordnet sein kann. Die zweite zweite Befestigungsbohrung ist vorzugsweise gewindefrei ausgebildet. Die zweite erste Befestigungsbohrung und/oder die zweite zweite Befestigungsbohrung sind vorzugsweise als Durchgangsbohrung ausgebildet. Zur Montage- bzw. Transportsicherung der Getriebeeinheit kann insbesondere eine Schraube in der zweiten zweiten Befestigungsbohrung angeordnet und in das Gewinde der zweiten ersten Befestigungsbohrung eingeschraubt werden. Die zweiten Befestigungsbohrungen sind vorzugsweise senkrecht zu der Spindelachse angeordnet.

In einer Weiterbildung der Erfindung können der erste Teil des ersten Halteabschnitts und der erste Teil des zweiten Halteabschnitts einerseits und/oder der zweite Teil des ersten Halteabschnitts und der zweite Teil des zweiten Halteabschnitts andererseits jeweils ein Eingriffselement zum Herstellen eines formschlüssigen Eingriffs mit dem Sitz aufweisen. Dadurch kann die Anordnung des ersten Gehäuseteils und des zweiten Gehäuseteils zueinander definiert werden, vor der eigentlichen Befestigung des Gehäuses an dem Sitz. Das Eingriffselement kann damit als Montagesicherung dienen und die Montage der Getriebeeinheit an dem Sitz vereinfachen. Der Sitz kann ein Gegenstück aufweisen, das vorzugsweise mit dem Eingriffselement formschlüssig anordenbar ist. Das Eingriffselement ist bevorzugt als Vorsprung oder Aussparung ausgebildet und kann ringförmig um eine der ersten Befestigungsbohrungen bzw. eine der zweiten Befestigungsbohrungen angeordnet sein.

In einer bevorzugten Ausführungsform der Erfindung sind das erste Gehäuseteil und der daran angeformte zumindest eine Teil des Halteelements identisch zu dem zweiten Gehäuseteil und dem daran angeformten zumindest einen Teil des Halteelements ausgebildet. Dadurch kann der Aufwand zur Herstellung des Getriebes, insbesondere mit Blick auf die erforderliche Logistik, reduziert, und die Montage vereinfacht werden.

Vorzugsweise ist das Halteelement an einem ersten Ende des Gehäuses angeordnet und das erste Gehäuseteil und das zweite Gehäuseteil sind an einem dem ersten Ende gegenüberliegenden zweiten Ende des Gehäuses formschlüssig und/oder stoffschlüssig miteinander verbunden. Dazu kommt insbesondere ein Vernieten, ein Vercrimpen, ein Verpressen bzw. ein Verschweißen der beiden Gehäuseteile in Betracht. Dadurch kann einerseits eine Transport- bzw. Montagesicherung der Getriebeeinheit realisiert werden. Andererseits kann dadurch ein Aufbiegen des Gehäuses unter Belastung im Betrieb des Getriebegehäuses vermieden werden.

Das erste Gehäuseteil und das zweite Gehäuseteil können jeweils eine Schnittstellenkontur aufweisen, an der das jeweils andere Gehäuseteil anliegt, wobei die Schnittstellenkontur derart ausgebildet ist, dass genau eine Möglichkeit zur formschlüssigen Montage des ersten Gehäuseteils und des zweiten Gehäuseteils besteht. Das erste Gehäuseteil und das zweite Gehäuseteil können damit nach dem Poka-Yoke-Prinzip ausgebildet sein. Entsprechendes gilt vorzugsweise für die daran jeweils angeformten Teile des Halteelements. Die Montage der Getriebeeinheit kann so vereinfacht werden.

Ein Zahnrad der Getriebestufe kann derart in dem Gehäuse gelagert sein, dass einseitig eine Lagerbuchse zwischen dem Zahnrad und dem Gehäuse angeordnet ist. Dadurch kann die Lage des Zahnrads zu dem ersten Gehäuseteil und/oder dem zweiten Gehäuseteil eingestellt werden. Weist das Zahnrad zwei unterschiedlich ausgebildete Lagerstellen auf, können diese Unterschiede mittels der Lagerbuchse ausgeglichen werden, um das Zahnrad in identisch ausgebildeten Gehäuseteilen lagern zu können. Vorzugsweise ist die Lagerbuchse einseitig zwischen der Schnecke und dem ersten Gehäuseteil angeordnet.

Das erste Gehäuseteil und das daran angeformte zumindest eine Teil des Halteelements kann als Stanz-Biege-Teilen und/oder Metall-Druckguss-Teil, insbesondere Zink-Druckguss-Teil oder Aluminium-Druckguss-Teil, ausgebildet sein. Entsprechendes gilt vorzugsweise für das zweite Gehäuseteil und das daran angeformte zumindest eine Teil des Halteelements. Vorzugsweise sind das erste Gehäuseteil und das zweite Gehäuseteil aus dem gleichen Material und/oder mit dem gleichen Fertigungsverfahren hergestellt.

Eine erfindungsgemäße verstellbare Sitzeinheit, insbesondere für ein Fahrzeug, umfasst einen Sitz und eine vorstehend beschriebene Getriebeeinheit, wobei das Halteelement der Getriebeeinheit an einer Sitzschiene des Sitzes befestigt ist. Die Sitzeinheit kann ferner eine Gewindespindel umfassen, die mit der Spindelmutter in Eingriff steht. Vorzugsweise weist die Sitzeinheit zwei Getriebeeinheiten, zwei Sitzschienen und zwei Gewindespindeln auf, die jeweils entsprechend ausgebildet bzw. angeordnet sind. Die Sitzeinheit ist vorzugsweise zur Längsverstellung des Sitzes ausgebildet.

Ein Ausführungsbeispiel der Erfindung wird anhand der nachfolgenden Figuren erläutert. Es zeigt:
- Figur 1: eine schematische Darstellung eines Ausführungsbeispiels einer Getriebeeinheit auf einer Gewindespindel,
- Figur 2: eine schematische perspektivische Ansicht des in Fig. 1 dargestellten Ausführungsbeispiels,
- Figur 3: eine schematische Explosionsansicht des in Fig. 1 dargestellten Ausführungsbeispiels,
- Figur 4: eine schematische perspektivische Ansicht eines Gehäuseteils mit angeformten Halteabschnitten des in Fig. 1 dargestellten Ausführungsbeispiels,
- Figur 5: eine schematische Draufsicht des in Fig. 4 dargestellten Gehäuseteils mit angeformten Halteabschnitten,
- Figur 6: eine schematische erste Seitenansicht des in Fig. 1 dargestellten Ausführungsbeispiels mit eingezeichneter Schnittebene A-A,
- Figur 7: eine schematische Längsschnittansicht des in Fig. 1 dargestellten Ausführungsbeispiels entlang der in Fig. 6 eingezeichneten Schnittebene A-A,
- Figur 8: eine schematische zweite Seitenansicht des in Fig. 1 dargestellten Ausführungsbeispiels mit eingezeichneter Schnittebene B-B,
- Figur 9: eine schematische Querschnittansicht des in Fig. 1 dargestellten Ausführungsbeispiels entlang der in Fig. 8 eingezeichneten Schnittebene B-B.

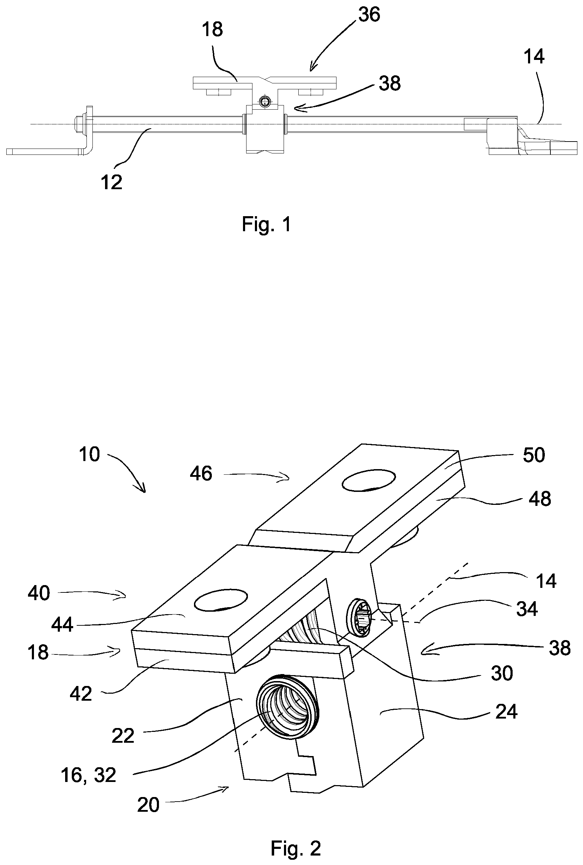

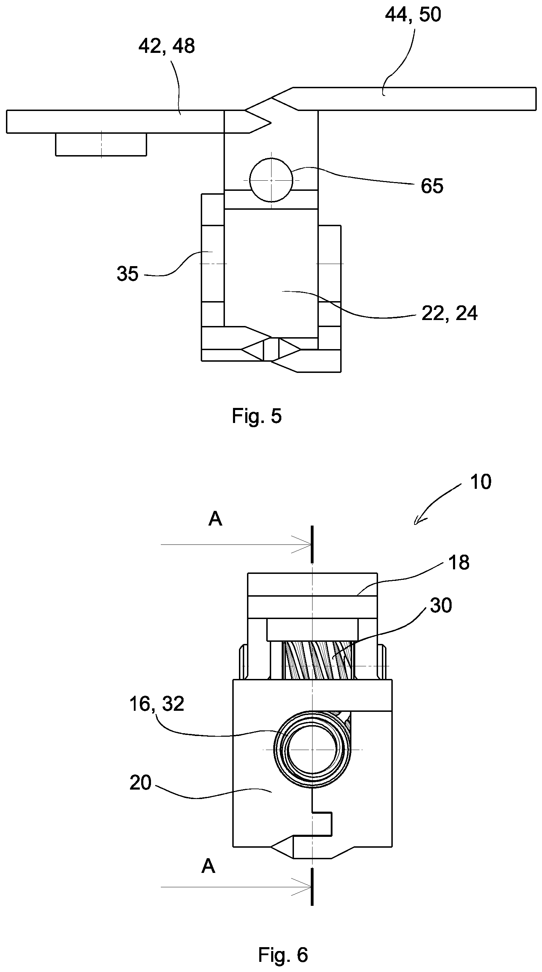

Die Figuren 1 bis 9 zeigen verschiedene Ansichten eines Ausführungsbeispiels. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt einen Teil einer verstellbaren Sitzeinheit, umfassend ein Ausführungsbeispiel einer Getriebeeinheit 10 zur Verstellung, insbesondere Längsverstellung, eines Sitzes, insbesondere eines Fahrzeugsitzes, sowie eine Gewindespindel 12, auf der die Getriebeeinheit 10 angeordnet ist. Die Gewindespindel 12 ist auf einer Spindelachse 14 einer Spindelmutter 16 der Getriebeeinheit 10 angeordnet. Ein Halteelement 18 der Getriebeeinheit 10 ist vorzugsweise an einer nicht dargestellten Sitzschiene eines ebenfalls nicht gezeigten Sitzes der Sitzeinheit befestigbar. Die Sitzeinheit umfasst die Getriebeeinheit 10 sowie die Gewindespindel 12 vorzugsweise in zweifacher Ausfertigung. Die Sitzeinheit ist vorzugsweise zur Längsverstellung des Sitzes entlang der Spindelachse 14 ausgebildet.

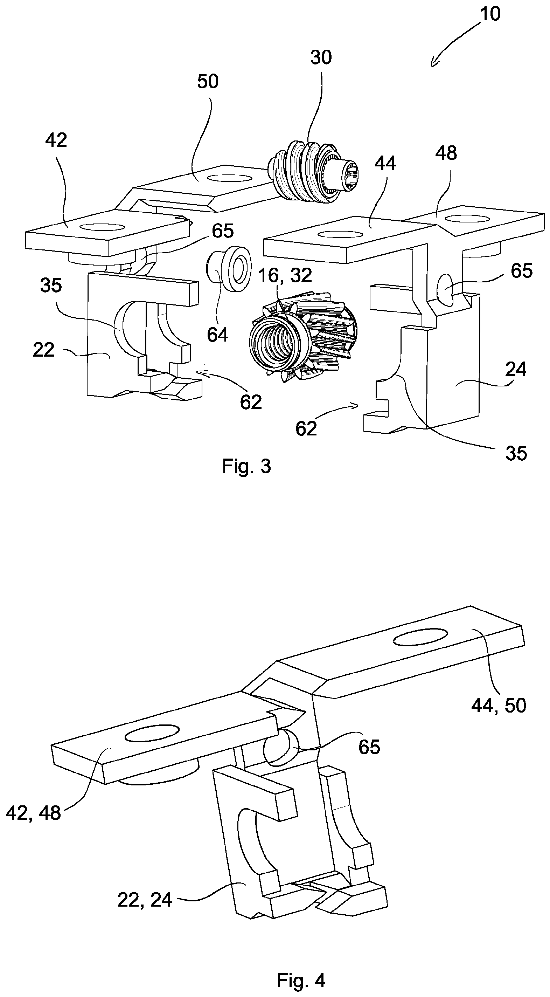

Die Getriebeeinheit 10 ist in Fig. 2 in perspektivischer Darstellung gezeigt. In der Explosionsansicht der Fig. 3 sind die einzelnen Komponenten der Getriebeeinheit 10 veranschaulicht. Die Getriebeeinheit 10, umfasst ein Gehäuse 20 mit einem ersten Gehäuseteil 22, einem zweiten Gehäuseteil 24 eine in dem Gehäuse angeordneten Getriebestufe 26 und das Halteelement 18 zum Herstellen einer mechanischen Wirkverbindung der Getriebeeinheit 10 mit dem Sitz.

Die Getriebestufe 26 ist als Schneckengetriebe mit einer Schnecke 30 und einem Schneckenrad 32 ausgebildet. Das Schneckenrad 32 und die Schnecke 30 sind in dem Gehäuse 20 gelagert. Das Schneckenrad 32 bildet dabei die Spindelmutter 16 mit der Spindelachse 14. Die Schnecke 30 ist drehbar um eine, senkrecht zur Spindelachse 14 angeordneten Schneckenachse 34 gelagert. Das Schneckenrad 32 und die Schnecke 30 sind jeweils in dem ersten Gehäuseteil 22 und dem zweiten Gehäuseteil 24 gelagert. Das Gehäuse 20 weist zur Lagerung des Schneckenrads 32 vorgesehene Schneckenradlagersitze 35 auf, die als geteilte Lagersitze ausgebildet sind. Wie die Fig. 3 veranschaulicht, weist die Getriebeeinheit 10 eine vergleichsweise geringe Teileanzahl auf. Nach Montage in die Sitzeinheit, ist die Getriebestufe 26 so mittels der mit dem Schneckenrad 32 im Eingriff stehenden, auf der Spindelachse 14 angeordneten Gewindespindel 12 antreibbar (siehe Fig. 1).

Wie insbesondere die Fig. 1 u. 2 zeigen, ist die Getriebeeinheit 10 im Wesentlichen T-förmig mit einem horizontalen Abschnitt 36 und einem in den horizontalen Abschnitt 36 mündenden vertikalen Abschnitt 38 ausgebildet. Dabei ist der vertikale Abschnitt 38 im Wesentlichen durch das Gehäuse 20 und der horizontale Abschnitt 36 im Wesentlichen durch das Halteelement 18 gebildet. Das Halteelement 18 ist damit parallel zu der Spindelachse 14 angeordnet.

Insbesondere die Fig. 2 u. 3 zeigen, dass das Halteelement 18 einen ersten Halteabschnitt 40 aufweist, wobei ein erster Teil 42 des ersten Halteabschnitts 40 einstückig an das erste Gehäuseteil 22 und ein zweiter Teil 44 des ersten Halteabschnitts 40 einstückig an das zweite Gehäuseteil 24 angeformt ist. Der vollständige erste Halteabschnitt 40 wird somit bei der Montage der Getriebeeinheit 10 durch das Zusammensetzen des ersten Gehäuseteils 22 und des zweiten Gehäuseteils 24 zu dem Gehäuse 20 gebildet.

Das Halteelement 18 weist neben dem ersten Halteabschnitt 40 einen zweiten Halteabschnitt 46 auf. Ein erster Teil 48 des zweiten Halteabschnitts 46 ist einstückig an das zweite Gehäuseteil 24 angeformt. Ein zweiter Teil 50 des zweiten Halteabschnitts 46 ist einstückig an das erste Gehäuseteil 22 angeformt. Der vollständige zweite Halteabschnitt 46 wird somit bei der Montage der Getriebeeinheit 10 durch das Zusammensetzen des ersten Gehäuseteils 22 und des zweiten Gehäuseteils 24 zu dem Gehäuse 20 gebildet.

Wie die Darstellung der Fig. 2 **u.** 3 zeigen, sind die ersten Teile 42, 48 und die zweiten Teile 44, 50 der Halteabschnitte 40, 46 jeweils flächig ausgebildet und parallel zu einer parallel zu der Spindelachse 14 und parallel zu der Schneckenachse 34 angeordneten, nicht dargestellten, Ebene angeordnet. Die ersten Teile 42, 48 der Halteabschnitte 40, 46 sind jeweils näher an der Spindelachse 14 angeordnet als die zweiten Teile 44, 50 der Halteabschnitte 40, 46. Das Halteelement 18 ist entlang der Spindelachse 14 ausgerichtet. Der erste Halteabschnitt 40 und der zweite Halteabschnitt 46 sind in Richtung der Spindelachse 14 hintereinander angeordnet.

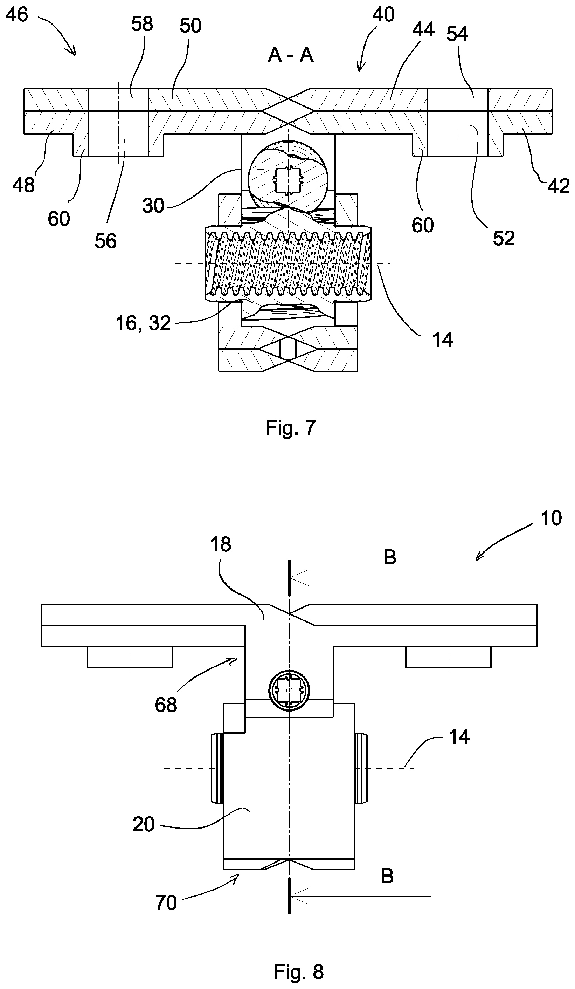

Wie insbesondere die Schnittansicht der Fig. 7 zeigt, ist in dem ersten Teil 42 des ersten Halteabschnitts 40 eine erste erste Befestigungsbohrung 52 und in dem zweiten Teil 44 des ersten Halteabschnitts 40 eine erste zweite Befestigungsbohrung 54 angeordnet, wobei die erste erste Befestigungsbohrung 52 und die erste zweite Befestigungsbohrung 54 koaxial zueinander angeordnet sind.

In dem ersten Teil 48 des zweiten Halteabschnitts 46 ist eine zweite erste Befestigungsbohrung 56 und in dem zweiten Teil 50 des zweiten Halteabschnitts 46 ist eine zweite zweite Befestigungsbohrung 58 angeordnet, wobei die zweite erste Befestigungsbohrung 56 und die zweite zweite Befestigungsbohrung 58 koaxial zueinander angeordnet sind. Die Befestigungsbohrungen 52, 54, 56, 58 sind senkrecht zu der Spindelachse 14 angeordnet.

Mittels der ersten Befestigungsbohrungen 52, 54 und mittels der zweiten Befestigungsbohrungen 56, 58 kann die mechanische Wirkverbindung der Getriebeeinheit 10 mit dem Sitz hergestellt werden. Bereits vor der Herstellung dieser mechanischen Wirkverbindung kann bei der Montage der Getriebeeinheit 10 eine Montage- bzw. Transportsicherung hergestellt werden, indem jeweils eine Schraube oder ein Bolzen in den beiden ersten Befestigungsbohrungen 52, 54 und den beiden zweiten Befestigungsbohrungen 56, 58 angeordnet wird.

Die erste erste Befestigungsbohrung 52 und die zweite erste Befestigungsbohrung 56 können jeweils als Gewindebohrung ausgebildet sein (nicht dargestellt). Die erste zweite Befestigungsbohrung 54 und die zweite zweite Befestigungsbohrung 58 sind vorzugsweise jeweils gewindefrei ausgebildet. Sämtliche Befestigungsbohrungen 52, 54, 56, 58 sind vorzugsweise als Durchgangsbohrung ausgebildet. Zur Montage- bzw. Transportsicherung der Getriebeeinheit 10 kann so eine Schraube in der ersten zweiten Befestigungsbohrung 54 und in das Gewinde der ersten ersten Befestigungsbohrung 52 eingeschraubt werden. In entsprechender Weise kann eine Schraube in der zweiten zweiten Befestigungsbohrung 58 angeordnet und in das Gewinde der zweiten ersten 56 Befestigungsbohrung eingeschraubt werden.

Wie die in Fig. 7 gezeigte Schnittansicht weiter darstellt, weisen der erste Teil 42 des ersten Halteabschnitts 40 und der erste Teil 48 des zweiten Halteabschnitts 46 jeweils einen als Vorsprung ausgebildeten Kragen 60 auf. In jedem der Krägen 60 ist jeweils zumindest einen Abschnitt der nicht dargestellten Gewinde der ersten ersten Befestigungsbohrung 52 und der zweiten ersten Befestigungsbohrung 56 angeordnet.

Wie vor allem die Fig. 3 zeigt, sind das erste Gehäuseteil 22, der daran angeformte erste Teil 42 des ersten Halteabschnitts 40 und der daran angeformte zweite Teil 50 des zweiten Halteabschnitts 46 identisch zu dem zweiten Gehäuseteil 24, dem daran angeformten zweiten Teil 44 des ersten Halteabschnitts 40 und dem daran angeformten ersten Teil 48 des zweiten Halteabschnitts 46 ausgebildet. Die in den Fig. 4 **u.** 5 gezeigte Komponente stellt somit sowohl das erste Gehäuseteil 22 mit den angeformten Teilen 42, 50 als auch das zweite Gehäuseteil 24 mit den daran angeformten Teilen 44, 48 dar.

Wie die Fig. 2 und 3 zeigen, weisen das erste Gehäuseteil 22 und das zweite Gehäuseteil 24 jeweils eine Schnittstellenkontur 62 auf, an der das jeweils andere der Gehäuseteile 22, 24 anliegt, wobei die Schnittstellenkontur 62 derart ausgebildet ist, dass genau eine Möglichkeit zur formschlüssigen Montage des ersten Gehäuseteils 22 und des zweiten Gehäuseteils 24 besteht. Das erste Gehäuseteil und das zweite Gehäuseteil können damit nach dem Poka-Yoke-Prinzip ausgebildet sein. Entsprechendes gilt für die daran jeweils angeformten Teile 42, 44, 48, 50 des Halteelements 18.

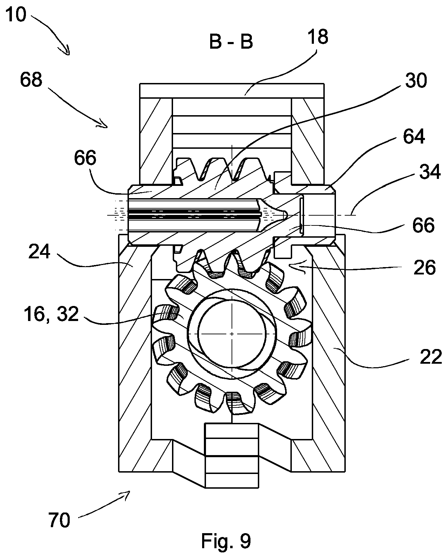

Wie insbesondere die Schnittansicht der Fig. 9 zeigt, ist die Schnecke 30 der Getriebestufe 26 derart in dem Gehäuse 20 gelagert, dass einseitig eine Lagerbuchse 64 zwischen der Schnecke 30 und dem Gehäuse 20 angeordnet ist, nämlich zwischen der Schnecke 30 und dem ersten Gehäuseteil 22. Dadurch kann eine zu dem Gehäuse 20 asymmetrisch angeordnete Lage der Schnecke 30 eingestellt werden. Außerdem kann die Schnecke 30 damit in den identisch ausgebildeten Gehäuseteilen 22, 24 gelagert werden, die damit auch über identisch ausgebildete Schneckenlagersitze 65 aufweisen, obwohl die Schnecke 30 zwei unterschiedlich ausgebildete Lagerstellen 66 aufweist.

Wie die Fig. 8 und 9 außerdem zeigen, ist das Halteelement 18 an einem ersten Ende 68 des Gehäuses 20 angeordnet. Das erste Gehäuseteil 22 und das zweite Gehäuseteil 24 sind an einem dem ersten Ende 68 gegenüberliegenden zweiten Ende 70 des Gehäuses 20 formschlüssig und/oder stoffschlüssig miteinander verbunden. Dazu kommt insbesondere ein Vernieten, ein Vercrimpen, ein Verpressen bzw. ein Verschweißen der beiden Gehäuseteile 22, 24 in Betracht.

### Bezugszeichenliste

- 10: Getriebeeinheit
- 12: Gewindespindel
- 14: Spindelachse
- 16: Spindelmutter
- 18: Halteelement
- 20: Gehäuse
- 22: erstes Gehäuseteil
- 24: zweites Gehäuseteil
- 26: Getriebestufe
- 30: Schnecke
- 32: Schneckenrad
- 34: Schneckenachse
- 35: Schneckenradlagersitz
- 36: horizontaler Abschnitt
- 38: vertikaler Abschnitt
- 40: erster Halteabschnitt
- 42: erster Teil
- 44: zweiter Teil
- 46: zweiter Halteabschnitt
- 48: erster Teil
- 50: zweiter Teil
- 52: erste erste Befestigungsbohrung
- 54: erste zweite Befestigungsbohrung
- 56: zweite erste Befestigungsbohrung
- 58: zweite zweite Befestigungsbohrung
- 60: Kragen
- 62: Schnittstellenkontur
- 64: Lagerbuchse
- 65: Schneckenlagersitz
- 66: Lagerstelle
- 68: erstes Ende
- 70: zweites Ende

## Patentansprüche

1. Getriebeeinheit (10) zur Verstellung, insbesondere Längsverstellung, eines Sitzes, insbesondere eines Fahrzeugsitzes, mit einem Gehäuse (20) umfassend ein erstes Gehäuseteil (22), einer in dem Gehäuse (20) angeordneten Getriebestufe (26) und einem Halteelement (18) zum Herstellen einer mechanischen Wirkverbindung der Getriebeeinheit (10) mit dem Sitz,
**dadurch gekennzeichnet, dass** zumindest ein Teil (42, 50) des Halteelements (18) einstückig an das erste Gehäuseteil (22) angeformt ist.

2. Getriebeeinheit (10) nach Anspruch 1,
**dadurch gekennzeichnet, dass** das Gehäuse (20) ein zweites Gehäuseteil (24) aufweist, wobei zumindest ein Teil (44, 48) des Halteelements (18) einstückig an das zweite Gehäuseteil (24) angeformt ist.

3. Getriebeeinheit (10) nach einem der vorhergehenden Ansprüche, **dadurch gekennzeichnet, dass** das Halteelement (18) einen ersten Halteabschnitt (40) aufweist, wobei ein erster Teil (42) des ersten Halteabschnitts (40) einstückig an das erste Gehäuseteil (22) angeformt ist.

4. Getriebeeinheit (10) nach den Ansprüchen 2 und 3,
**dadurch gekennzeichnet, dass** ein zweiter Teil (44) des ersten Halteabschnitts (40) einstückig an das zweite Gehäuseteil (24) angeformt ist.

5. Getriebeeinheit (10) nach Anspruch 4,
**dadurch gekennzeichnet, dass** in dem ersten Teil des ersten Halteabschnitts (40) eine erste erste Befestigungsbohrung (52) und in dem zweiten Teil des ersten Halteabschnitts (40) eine erste zweite Befestigungsbohrung (54) angeordnet ist, wobei die erste erste Befestigungsbohrung (52) und die erste zweite Befestigungsbohrung (54) koaxial zueinander angeordnet sind.

6. Getriebeeinheit (10) nach einem der vorhergehenden Ansprüche, **dadurch gekennzeichnet, dass** das Halteelement (18) einen zweiten Halteabschnitt (46) aufweist, wobei ein zweiter Teil (50) des zweiten Halteabschnitts einstückig an das erste Gehäuseteil (22) angeformt ist.

7. Getriebeeinheit (10) nach den Ansprüchen 2 und 6 oder nach den Ansprüchen 2 und 6 und einem der vorhergehenden Ansprüche,
**dadurch gekennzeichnet, dass** ein erster Teil (48) des zweiten Halteabschnitts (46) einstückig an das zweite Gehäuseteil (24) angeformt ist.

8. Getriebeeinheit (10) nach Anspruch 7,
**dadurch gekennzeichnet, dass** in dem ersten Teil (48) des zweiten Halteabschnitts (46) eine zweite erste Befestigungsbohrung (56) und in dem zweiten Teil (50) des zweiten Halteabschnitts (46) eine zweite zweite Befestigungsbohrung (58) angeordnet ist, wobei die zweite erste Befestigungsbohrung (56) und die zweite zweite Befestigungsbohrung (58) koaxial zueinander angeordnet sind.

9. Getriebeeinheit (10) nach einem der Ansprüche 7 bis 8,
**dadurch gekennzeichnet, dass** der erste Teil (42) des ersten Halteabschnitts (40) und der erste Teil (48) des zweiten Halteabschnitts (46) einerseits und/oder der zweite Teil (44) des ersten Halteabschnitts (40) und der zweite Teil (50) des zweiten Halteabschnitts (46) andererseits jeweils ein Eingriffselement zum Herstellen eines formschlüssigen Eingriffs mit dem Sitz aufweisen.

10. Getriebeeinheit (10) nach Anspruch 2 oder nach Anspruch 2
und einem der vorhergehenden Ansprüche,
**dadurch gekennzeichnet, dass** das erstes Gehäuseteil (22) und der daran angeformte zumindest eine Teil (42, 50) des Halteelements (18) identisch zu dem zweiten Gehäuseteil (24) und dem daran angeformten zumindest einen Teil (44, 48) des Halteelements (18) ausgebildet sind.

11. Getriebeeinheit (10) nach Anspruch 2 oder nach Anspruch 2
und einem der vorhergehenden Ansprüche,
**dadurch gekennzeichnet, dass** das Halteelement (18) an einem ersten Ende (68) des Gehäuses (20) angeordnet ist und das erste Gehäuseteil (22) und das zweite Gehäuseteil (24) an einem dem ersten Ende (68) gegenüberliegenden zweiten Ende (70) des Gehäuses (20) formschlüssig und/oder stoffschlüssig miteinander verbunden sind.

12. Getriebeeinheit (10) nach Anspruch 2 oder nach Anspruch 2
und einem der vorhergehenden Ansprüche,
**dadurch gekennzeichnet, dass** das erste Gehäuseteil (22) und das zweite Gehäuseteil (24) jeweils eine Schnittstellenkontur (62) aufweisen, an der das jeweils andere Gehäuseteil anliegt, wobei die Schnittstellenkontur (62) derart ausgebildet ist, dass genau eine Möglichkeit zur formschlüssigen Montage des ersten Gehäuseteils (22) und des zweiten Gehäuseteils (24) besteht.

13. Getriebeeinheit (10) nach einem der vorhergehenden Ansprüche, **dadurch gekennzeichnet, dass** ein Zahnrad der Getriebestufe (26) derart in dem Gehäuse (20) gelagert ist, dass einseitig eine Lagerbuchse (64) zwischen dem Zahnrad und dem Gehäuse (20) angeordnet ist.

14. Getriebeeinheit (10) nach einem der vorhergehenden Ansprüche, **dadurch gekennzeichnet, dass** das erste Gehäuseteil (22) und das daran angeformte zumindest eine Teil (42, 50) des Halteelementes (18) als Stanz-Biege-Teilen und/oder Metall-Druckguss-Teil, insbesondere Zink-Druckguss-Teil oder Aluminium-Druckguss-Teil, ausgebildet ist.

15. Verstellbare Sitzeinheit, insbesondere für ein Fahrzeug,
mit einem Sitz und einer Getriebeeinheit (10) nach einem der vorhergehenden Ansprüche, wobei das Halteelement (18) der Getriebeeinheit (10) an einer Sitzschiene des Sitzes befestigt ist.
